Europäisches Patentamt

European Patent Office

Office européen des brevets

(11) Publication number: **0 387 496**

**A1**

## EUROPEAN PATENT APPLICATION

(21) Application number: **90101050.4**

(22) Date of filing: **19.01.90**

(51) Int. Cl.5: **B29C 45/67**

(30) Priority: **10.02.89 IT 1939389**

(43) Date of publication of application:
**19.09.90 Bulletin 90/38**

(84) Designated Contracting States:
**AT BE CH DE DK ES FR GB GR IT LI LU NL SE**

(71) Applicant: **OIMA S.p.A.**
**Via Feltrina Sud, 172**
**I-31044 Montebelluna Treviso(IT)**

(72) Inventor: **Soncini, Gino**
**Via Monte Valderoa, 11**
**I-31044 Montebelluna - Treviso(IT)**

(74) Representative: **De Nova, Roberto et al**
**c/o Jacobacci-Casetta & Perani S.n.c. Via**
**Visconti di Modrone 7**
**I-20122 Milano(IT)**

(54) **A clamping assembly for injection molding presses.**

(57) In a clamping assembly (1) of an injection molding press for plastic materials, adjustment of the gap between a stationary die-holding head (3) and a reaction head (5), movable along a plurality of guiding pillars (8) attached to the stationary head (3), is performed in a simple and reliable manner by means of plural cylinder-piston units (9) mounted on the reaction head (5) and each associated with a respective one of the guiding pillars (8).

FIG.1

EP 0 387 496 A1

This invention relates to a clamping assembly for injection molding presses, being of a type which comprises a stationary die-holding head, a reaction head in spaced-apart relationship with said stationary head and movable adjustably toward and away therefrom by the action of an adjustment means, along a plurality of parallel guiding pillars attached to the stationary head, and a movable die-holding head associated with said reaction head and driven along said pillars by drive means toward and away from a clamped-die position where the movable head locates at a predetermined short distance from the stationary head.

As is known, with the above clamping assemblies, it is required that the gas between the reaction head, wherewith the movable head is associated, and the stationary head be adjusted to suit the thickness of the die to be installed on the stationary and movable die-holding heads.

To enable that setting to be performed, conventional clamping assemblies are usually provided, at the stationary and reaction heads, with screw nuts engaging the ends of the guiding pillars. The nuts on the reaction head are turned synchronously by a respective gear and electrically or hydraulically operated linkage arrangement whereby the reaction head can be moved toward or away from the stationary head according to which direction the nuts are being turned.

However, the use of such screw nuts and mechanical arrangements for turning them makes the clamping assemblies complicated and, therefore, expensive.

In addition, the threadways on the nuts and pillars are subjected to unavoidable wear, especially after prolonged use thereof, which defeats an accurate adjustment of the reaction head setting.

The problem that underlies this invention is to provide a clamping assembly as indicated which has such structural and performance characteristics as to overcome the drawbacks noted above with which the prior art is beset.

This problem is solved according to the invention by a clamping assembly of the kind specified above being characterized in that it comprises a plurality of double-acting cylinder/piston units mounted between the reaction head and said pillars as said adjustment means.

The features and advantages of a clamping assembly according to the invention will become apparent from the following detailed description of a preferred embodiment thereof, given by way of illustration and not of limitation with reference to the accompanying drawings.

In the drawings:

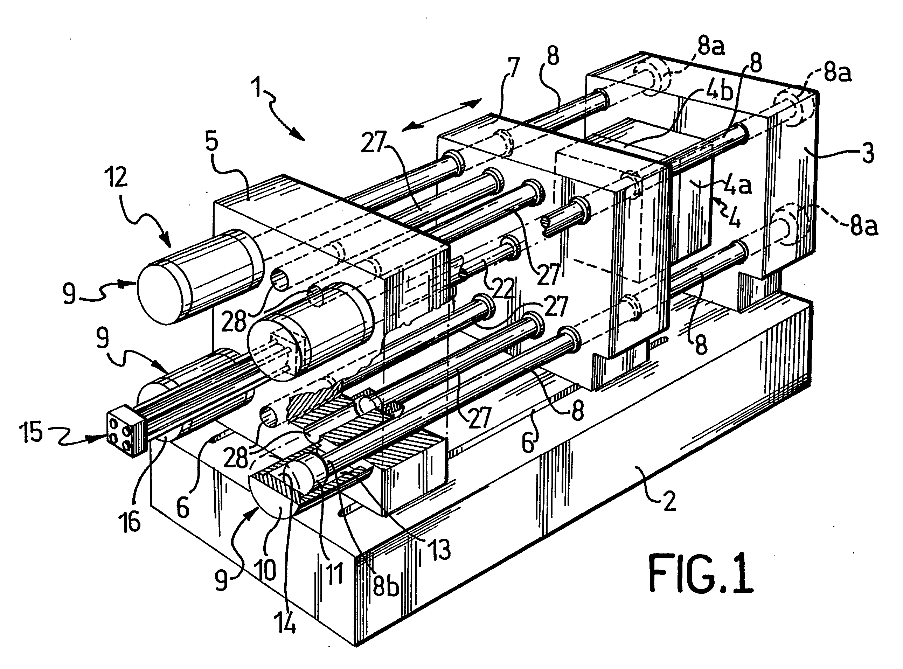

Figure 1 is a perspective view showing schematically a clamping assembly according to the invention;

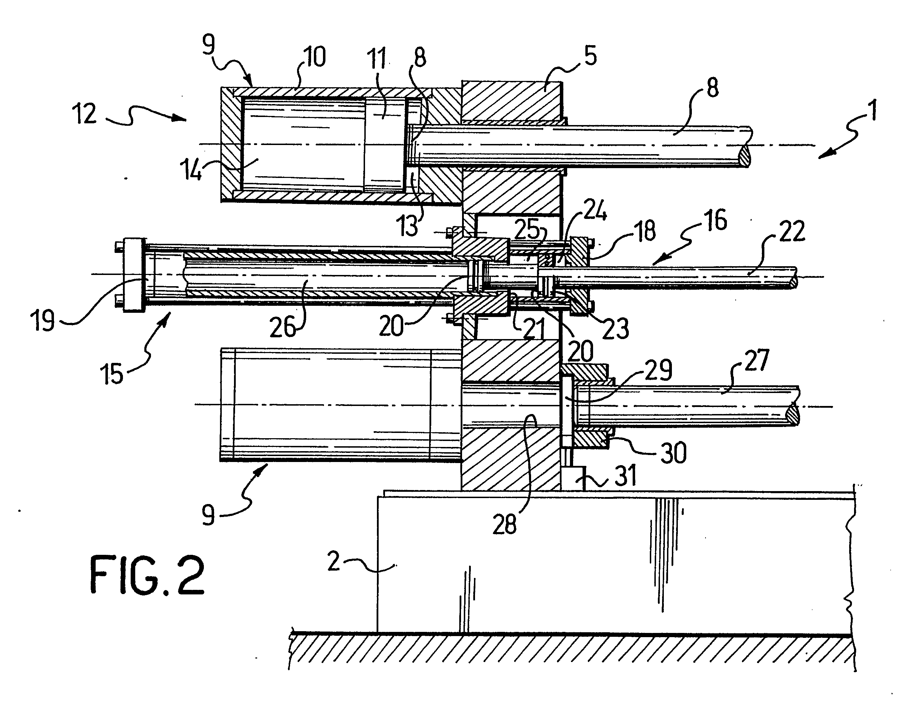

Figure 2 is a side elevation view showing in section a detail of the clamping assembly of Figure 1; and

Figures 3 and 4 are side views showing schematically the assembly of Figure 1 at two stages of its operation.

With reference to the drawing views, generally indicated at 1 is a clamping assembly for a plastics injection molding press.

The assembly 1 comprises a base 2 on which a stationary die-holding head 3, consisting essentially of a vertically extending plate, is mounted and has a first die-half 4a associated therewith.

The clamping assembly 1 further comprises a reaction head 5, also substantially plate-like in shape, which is mounted on the base 2 and slidable toward and away from the stationary head 3 along horizontal slideways 6 formed on the base.

Indicated at 7 is a movable die-holding head which is mounted on the base 2 between the stationary 3 and reaction 5 heads and slidable along the slideways 6 in a horizontal direction. A second die-half 4b, facing the first die-half 4a, is carried on the movable die-holding head 7.

The clamping assembly 1 includes four parallel guiding pillars 8 attached, at a first end 8a thereof, to the stationary head 3 essentially on the apices of the latter, which pillars extend horizontally from the stationary head 3 through the movable head 7 and the reaction head 5, being fitted slidably within respective through-going cylindrical cavities formed in said heads and projecting past the reaction head 5 with a second end 8b thereof.

Mounted on the reaction head 5, on the remote side from the movable head 7 and at the second ends 8b of the pillars 8 and aligned to the latter, are four double-acting hydraulic cylinder 10/piston 11 units 9 which provide means of adjustment, generally designated 12, arranged to act on the reaction head 5 for setting its distance from the stationary head 3 to suit the thickness dimension of the die 4, as explained hereinafter.

Specifically, for each unit 9, the cylinder 10 is supported on the reaction head 5 and the piston 11 is attached to the end 8b of a respective pillar 8.

Furthermore, within each cylinder 10, a respective piston 11 defines a first chamber 13 next to the reaction head 5 and a second chamber 14 at the remote cylinder end therefrom; the chambers 13 and 14 are both connected to a pressurized hydraulic fluid supply circuit, known per se and omitted from the drawings.

The clamping assembly 1 further comprises a drive means 15 mounted on the reaction head 5 to the movable die-holding head 7 to drive it along the pillars 8 toward and away from a die 4 clamped position where the movable head 7 is at a predetermined short distance from the stationary head 3, with the die-halves 4a and 4b set close to each other.

The drive means 15 comprises a double-acting hydraulic jack 16 of the so-called tandem type which comprises a cylinder 17 being laid horizontally, mounted centrally through the reaction head 5, and having an end cap 18 facing toward the movable head 7 and an oppositely located head 19.

Mounted within the cylinder 17 is a cylindrical long-stroke shutter 20 which is slidable horizontally between the head 19 and an annular shoulder 21 formed circumferentially within the cylinder 17 at a short distance away from the end cap 18. Attached to the cylindrical shutter 20 is one end of a horizontally laid rod 22 which fits slidably through the end cap 18 and is made fast at the opposite end with the movable die-holding head 7.

The cylindrical shutter 20 has a larger diameter dimension than the rod 22; as a result, an annular ledge 20a facing the end cap 18 is defined between the shutter and the rod.

Also mounted within the cylinder 17 is an annular short-stroke shutter 23 having a large working surface area relatively to the stroke length, being fitted over the rod 22 and slidable along the rod inside the cylinder 17, between the end cap 18 and the shoulder 21.

Thus, there are defined inside the cylinder 17 a first chamber 24 between the end cap 18 and the annular shutter 23, a second chamber 25 between the annular shutter 23 and the cylindrical shutter 20, and a third chamber 26 between the cylindrical shutter 20 and the head 19; these chambers 24, 25 and 26 are connected in an independent manner to a hydraulic supply circuit, not shown.

Indicated at 27 are four spacing struts extending parallel and close to the guiding pillars 8, being attached to the movable head 7 and slidable inside respective cylindrical seats 28 formed in the reaction head 5.

It matters to observe that the length of the struts 27 is substantially equal to the gap between the reaction head 5 and the movable head 7 at said clamped die 4 position, that gap being tied to the overall stroke length of the rod 22 of the tandem jack 16. As a result, with the movable head 7 at the clamped die position, the struts 27 will be fully extended out of the seats 28.

Mounted on the side of the reaction head 5 facing the movable head 7, at the seats 28, are respective plate-like latches 29 which are guided for sliding movement within bushes 30, secured on the reaction head 5, from a locking position where they interfere with the seats 28 to block them, to a rest position where they are tucked away from the seats 28.

The latches 29 are driven from the locking position to the rest position, and vice versa, hydraulic drives mounted on the reaction head 5.

The clamping assembly 1 further comprises an electronic control, not shown because conventional, including linear transducers and being operative to control the adjustment means 12, drive means 15, and drives 31 for the latches 29.

After the die-halves 4a and 4b of a new die 4 have been secured on the stationary head 3 and the movable head 7, respectively, the gap between the reaction head 5 and the stationary head 3 is adjusted through the adjustment means 12 to suit the thickness of the new die 4. In particular, this is accomplished by supplying pressurized fluid into the chambers 13 (or 14) of the four cylinders 9 simultaneously, thus causing the reaction head 5 to move along the guiding pillars 8 toward (or away from) the stationary head 3 until the position is reached as pre-set by the control according to the thickness of the die 4.

It should be noted that as a result of the above adjustment, the movable head 7 associated with the reaction head 5 is also moved along the guiding pillars 8.

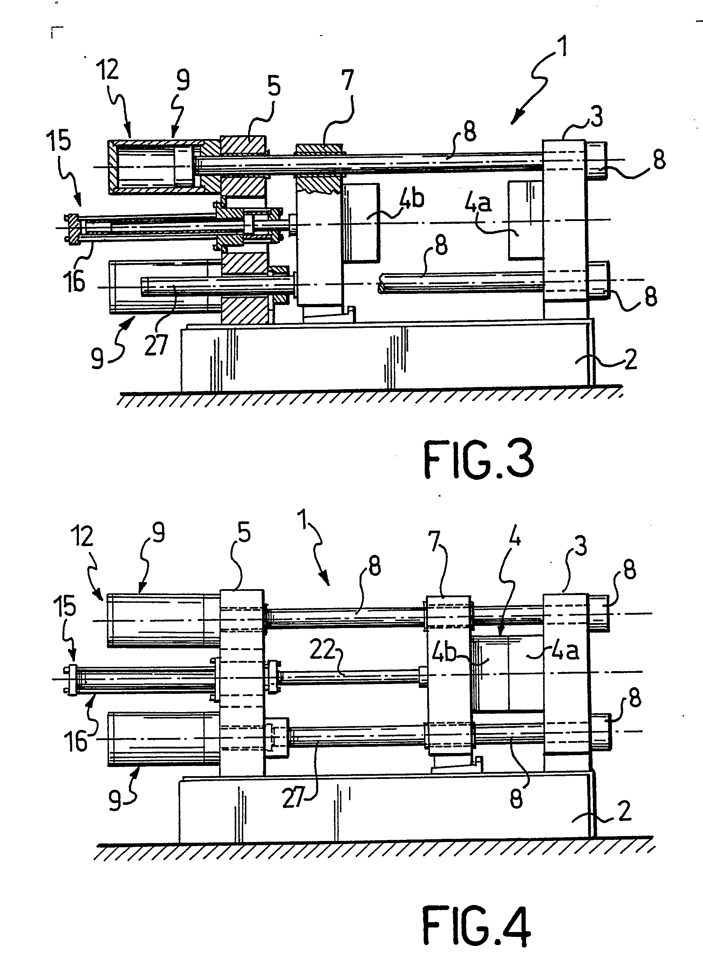

After the reaction head 5 has been set in position, the die 4 clamping is performed in the manner described herein below with reference to a starting condition as shown in Figure 3, wherein the clamping assembly 1 is shown with the movable head 7 backed away from the stationary head 3 and positioned close to the reaction head 5, the latches 29 in the rest position tucked away from the seats 28, and the spacing struts 27 inserted into said seats 28.

On admitting pressurized fluid into the chambers 26 and 25 of the jack 16, while leaving the chamber 24 in the released state, the rod 22 will move the movable head 7 rapidly away from the reaction head 5 toward the stationary head 3, until the die-half 4b carried on the movable head 7 is brought close to the die-half 4a.

As the movable head 7 is being advanced, the struts 27 are pulled out of the seats 28 in the reaction head 5, and on the clamped position being reached, the struts 27 will be fully out of the seats 28.

At this time, the control for the clamping assembly 1 will operate the drive means 31 to bring the latches 29 to the locking position interposed between the struts 27 and the seats 28.

Presently the hydraulic units 9 are again operated by admitting pressurized fluid into the chambers 13 to first take up the backlash and then put the whole clamping assembly under a load to exert a high die clamping force (see Figure 4).

It should be noted that during this step the guiding pillars 8 are tension stressed whereas the struts 27 are compression stressed.

To release the die 4, the chambers 13 of the hydraulic units 9 are first discharged gradually in a controlled way until the reaction head 5 again reaches its position setting established by the adjustment operation to suit the thickness of the die 4.

At that position, the hydraulic units 9 are again locked, and the control now operates the drive means 31 to move the latches 29 from the locking position to the rest position, tucked away from the seats 28.

With the latches 29 in the rest position, the drive means 31 are inactivated and pressurized fluid is supplied into the chamber 24 of the double-acting tandem jack 16.

Thus, the annular shutter 23 is pushed away from the end cap 18 of the cylinder 17 and, by pushing on the ledge 20a between the cylindrical shutter 20 and the rod 22, drives the rod and movable head 7 away from the stationary head 3 to initiate a release step.

Advantageously, the dimensions of the annular shutter 23 and of its stroke the cylinder 17 are selected such that, during the first release step for the die 4, the movable head 5 is driven away from the stationary head 3 at adequate force and rate to provide for optimum shake-out of the workpiece enclosed between the die halves 4a and 4b.

After this first release step, the control will also control pressurized fluid to be admitted into the chamber 25 of the jack 16, thereby the cylindrical shutter 20 is rapidly driven backwards toward the head 19 until the die 4 becomes fully unclamped and the movable head 7 is restored to the original condition with the spacing struts 27 inserted into the seat 28 in the reaction head 5.

The clamping assembly for injection molding presses, according to this invention, enables the gap between the reaction head and the stationary head to be adjusted to suit the the thickness of the die in a simple, quick and reliable manner for a comparatively low cost.

The clamping assembly of this invention affords additional important advantages, among which, first and foremost, the advantage of providing a high die clamping force from the action of the double-acting hydraulic units correspondingly mounted to the guiding pillars.

In addition, the provision of a double-acting tandem jack between the reaction head and the movable head both ensures a high tearing force and good speed during the initial die release step, and a high speed of the rapid approach/removal movements of the movable head relatively to the stationary head.

## Claims

1. A clamping assembly (1) for injection molding presses, being of a type which comprises a stationary die-holding head (3), a reaction head (5) in spaced-apart relationship with said stationary head (3) and movable adjustably toward and away therefrom by the action of an adjustment means (12), along a plurality of parallel guiding pillars (8) attached to the stationary head (3), and a movable die-holding head (7) associated with said reation head (5) and driven along said pillars (8) by drive means (15) toward and away from a clamped-die position where the movable head (7) locates at a predetermined short distance from the stationary head (3), characterized in that it comprises a plurality of double-acting cylinder/piston units (9) mounted between the reaction head (5) and said pillars (8) as said adjustment means (12).

2. A clamping assembly according to Claim 1, characterized in that said drive means (15) comprises a double-acting tandem type jack (16) mounted on the reaction head (5) to act on the movable head (7).

3. A clamping assembly according to Claim 2, characterized in that it comprises a plurality of spacing struts (27) extending parallel to said pillars (8), being attached to said movable head (6), and slidable within respective seats (28) formed in the reaction head (5), the length of said struts (27) being substantially equal to the distance from the reaction head (5) to the movable head (7) at said clamped-die position, and a plurality of latches (29) being provided on the reaction head (5) at said seats (28) and guided for movement toward and away from a locking position where they interfere with said seats (28).

FIG.1

FIG.2

EP 0 387 496 A1

FIG.3

FIG.4

## DOCUMENTS CONSIDERED TO BE RELEVANT

EP 90101050.4

| Category | Citation of document with indication, where appropriate, of relevant passages | Relevant to claim | CLASSIFICATION OF THE APPLICATION (Int. Cl.⁵) |
|---|---|---|---|
| X | <u>DE - A1 - 2 341 282</u><br>(LE GUEN & HEMIDY)<br>* Totality *<br>-- | 1,2 | B 29 C 45/67 |
| A | <u>DE - A1 - 3 446 507</u><br>(NISSEI PLASTIC INDUSTRIAL CO.)<br>* Totality *<br>-- | 1,3 | |
| A | <u>US - A - 4 243 369</u><br>(JAMES)<br>* Totality *<br>-- | | |
| A | <u>DE - A1 - 3 015 780</u><br>(NETSTAL)<br>* Totality *<br>---- | | |

TECHNICAL FIELDS
SEARCHED (Int. Cl.⁵)

B 29 C

The present search report has been drawn up for all claims

| Place of search | Date of completion of the search | Examiner |
|---|---|---|
| VIENNA | 18-05-1990 | MAYER |